# EUROPÄISCHE PATENTSCHRIFT

(11) **EP 0 484 866 B1**
(45) Veröffentlichungstag und Bekanntmachung des Hinweises auf die Patenterteilung: **26.06.1996**
(21) Anmeldenummer: 91118807.6
(22) Anmeldetag: 05.11.1991
(51) Int. Cl.: B09B 3/00, A62D 3/00

(54) **Verfahren zur umweltschonenden, gefahrlosen Entsorgung von asbesthaltigen Massen sowie Vorrichtung zur Durchführung des Verfahrens**
Method and device for safe and pollution-free disposal of asbestos-containing material
Procédé et dispositif pour l'élimination non-polluante et sans danger de matières contenant de l'amiante

(30) Priorität: 07.11.1990 DE 4035358
(43) Veröffentlichungstag der Anmeldung: 13.05.1992
(73) Patentinhaber: Dieter, Johannes, D-44287 Dortmund (DE)
(72) Erfinder: Dieter, Johannes, D-44287 Dortmund (DE)
(74) Vertreter: Hoffmeister, Helmut, Dr. Dipl.-Phys.

(56) Entgegenhaltungen:
- EP-A- 0 331 166
- EP-A- 0 344 563
- EP-A- 0 377 087
- WO-A-84/01738
- DE-A- 3 728 787
- US-A- 4 774 974
- KIRK-OTHMER 'Encyclopedia of chemical technology' 1978 , WILEY-INTERSCIENCE , NEW YORK , US 3rd edition , vol. 3
- PATENT ABSTRACTS OF JAPAN vol. 14, no. 285 (M-987)(4228) 20. Juni 1990 & JP-A-28 8 172 (SINTOKOGIO) 28. März 1990

## Beschreibung

Die Erfindung betrifft ein Verfahren und eine Vorrichtung zur umweltschonenden Entfernung von asbesthaltigen Massen von einem Substrat und zur Modifizierung der Massen.

Das Entfernen und Entsorgen von schwachgebundenen Asbestprodukten, bei denen ein niedriger Bindemittel- und ein hoher Asbestanteil vorhanden sind, stellt in letzter Zeit eine wesentliche Altlast-Entsorgungsaufgabe dar. Schwachgebundene Asbestprodukte enthalten einen Asbestanteil von über 60 Gew.% und haben ein niedriges Raumgewicht, in der Regel unter 1,0 g/cm . Derartige Asbestprodukte geben durch unterschiedliche Beeinflussung, z.B. Verwitterung oder mechanische Beanspruchung, Asbestfasern in die Atem-/Außenluft ab. Bei Spritzasbestflächen werden um so mehr Fasern freigesetzt, je lockerer die Oberflächenstruktur ist. Um die Freisetzung von Asbestfasern zu vermeiden, bzw. auf ein Minimum zu reduzieren, sind umfangreiche Sanierungsmaßnahmen erforderlich.

In der Broschüre der Maschinenbau- und Kleineisenindustrie-Berufsgenossenschaft Düsseldorf, "Asbest" wird ein Sanierungsverfahren auf Seite 44 beschrieben: "Das Asbestprodukt wird abschnittsweise angefeuchtet und vom Untergrund abgelöst. Dies geschieht durch Abschaben und Absaugen mit einer Vakuumpumpe. Das asbesthaltige Material wird über eine Saugleitung und Sauganlage pneumatisch in einen Container befördert.

Nach Ablösen des Asbestmaterials vom Untergrund bleiben in der Regel noch Faserreste zurück. Diese müssen anschließend faserdicht mit mindestens einem Deckanstrich eingebunden werden."

Das bekannte und vielerorts durchgeführte Verfahren erfolgt unter nicht unerheblichen Risiken. Nachteilig ist, daß im allgemeinen noch auf dem Substrat Asbestfasern verbleiben und daß das anfallende Asbestmaterial nur auf Sondermüll-Deponien gelagert werden kann.

Bekannt ist weiterhin ein Verfahren (EP 0 344 563 A2), bei dem Asbest-Abfall Material durch Thermomodifikation bei Temperaturen um 600° C in Forsterid umgewandet werden, wobei hier die Asbestarten Amiantus und Chrysotil erwähnt werden, die stark zur Faserbildung neigen. Das so gewonnene Forsterid ist beispielsweise als hitzebeständige Masse (refractory element), als Inertmaterial oder als isolierende Füllmasse geeignet.

Es stellt sich unter Kenntnis des vorgenannten Standes der Technik die Aufgabe, ein umweltschonendes, gefahrloses Entsorgungsverfahren anzugeben, bei dem das Substrat, das von der Asbestmasse befreit wird, praktrisch oberflächenrein von Asbestfasern ist, bei dem eine integrierte Unschädlichmachung der asbesthaltigen Massen erfolgt und bei dem diese Massen anschließend nicht auf Sondermüll-Deponien deponiert sowie wieder eingesetzt werden.

Diese Aufgabe wird gelöst bei einem Verfahren gemäß Anspruch 1.

Gegenüber dem Stand der Technik unterscheidet sich das genannte Verfahren im wesentlichen dadurch, daß das abgekühlte Gemisch als Strahlmittel für die Ablösung von Asbest wieder verwendet wird.

Das neue Verfahren geht von einer starken Befeuchtung des asbesthaltigen, abzutragenden Material aus. Die Befeuchtung geschieht zusmamen mit dem mechanischen Abtragen, was beispielsweise durch einen Hochdruck-Wasserstrahl, vorzugsweise durch einen Feuchtsand-Strahl, geschieht. Derartige Feuchtsand-Strahlgeräte sind beispielsweise bekannt aus der Europäischen Patentschrift 122 928.

Das von der Wand, von einem Rohr oder dergleichen abgetragene asbesthaltige Material wird unmittelbar am Ort des Entstehens abgesaugt und bildet ein feuchtes, stark wasserhaltiges Gemisch, in dem sich die abgetragene Asbestmasse, in manchen Fällen Farbreste oder dergleichen, sowie das Strahlmittel befinden. Diese noch feuchte, abgetragene Masse wird vorzugsweise entfeuchtet, beispielsweise in einer Zentrifuge oder in einem Druckfilter, und anschließend in einen Ofen gefördert, in dem das Gemisch erhitzt wird.

Wie an sich bekannt (vgl. VDI-Berichte 475, 1983) kommt es bei einer thermischen Behandlung der in Asbest enthaltenen cancerogenen Fasern, insbesondere des Krokydoliths und des Chrysotils, zu einer thermischen Umwandlung, die etwa bei 700°C beginnt und bei höherer Temepratur sogar sich noch schneller vollzieht. Die genannten Fasermaterialien wandeln sich in unschädliche Strukturen um, insbesondere das sogenannte Forsterit, einem olivin-ähnlichem Material.

Wesentlich ist ferner, daß die feuchte abgetragene Masse, enthaltend Asbestmasser, Wasser und gegebenenfalls Strahlmittel, unmittelbar hinter dem Asbestbereich abgesaugt und anschließend gefördert werden, was beispielsweise mit Hilfe einer Saug- und Druckleitung, mit einer in einem geschlossenen Rohr arbeitenden Förderschnecke oder mit einem geschlossenen Bandförderer geschehen kann. Wesentlich ist, daß das feuchte Material nicht während des Förderns herabfallen oder verlorengehen oder antrocknen kann, so daß die Entwicklung von Asbeststäuben verhindert wird. Unmittelbar vor Eintritt in den Ofen wird ein Großteil des Wassers abgefiltert, abzentrifugiert usw., so daß das in den Ofen einzubringende Material noch eine geringe Restfeuchte von etwa 2 - 10 Gew.% enthält und damit die erforderliche Wärmemenge geringer ist. Es ist auch möglich, den Wassergehalt mit Hilfe der von dem Erwärmungsofen kommenden Abwärme zu verringern, beispielsweise indem in Gegenstromverfahren ein Teil des Wassers abgedampft wird.

Wie an sich bekannt, ist für die Thermomodifikation der schädlichen Asbestfasern eine längere Temperatureinwirkung von 750°C - 1250°C erforderlich. Die Länge der Behandlung richtet sich nach der Kompaktheit des Asbestmaterials, dem Anteil der Asbestfasern und nach ähnlichen Parametern, die empirisch bestimmt werden müssen. Vorzugsweise wird nach dem Abkühlen und Trocknen jeweils eine auf kristallographischen Methoden beruhende Messung durchgeführt, um festzustellen, daß die besonders schädlichen Krokydolith- und Crysotil-Fasern nicht mehr vorhanden sind. Dies geschieht vorzugsweise durch Röntgen-Diffraktometrie.

Eine Vorrichtung zur Durchführung des Verfahrens umfaßt an sich bekannte Komponenten, die synergistisch zusammengefaßt sind. Das eigentliche mechanische Entfernen erfolgt durch einen Hochimpulsstrahl, der mit Hilfe eines Feuchtstrahlgerätes, wie es im Handel erhältlich ist, mit einem Hochdruckuasserstrahl oder dergleichen erfolgt. Auch hier wird man den Druck des Gerätes und damit den zeitlich auftreffenden Impuls, so einstellen, daß eine erfahrungsgemäße optimale Arbeitsweise möglich ist. Zur Erhitzung der asbesthaltigen Massen sind nur relativ kompakte und klein zu bauende Öfen erforderlich, wie sie beispielsweise Drehrohröfen oder Heißluft-Bandöfen sind. Derartige Öfen können auch geschlossen gebaut werden, so daß sie chargenweise zu beschicken sind. Es ist sogar möglich, ein Fahrzeug für die Asbestentsorgung und die Kontaminiation so auszurüsten, daß auf einer relativ kleinen Ladefläche sich das Grundgerät und die Zwischenbehälter für ein Feuchtsand-Strahlgerät sowie eine Erhitzungsvorrichtung einschließlich der notwendigen Vorratsbehälter für Heizöl und dergleichen, Steuerungsgeräte, Überwachungsgeräte usw. angeordnet werden können. Da die aus dem Drehrohrofen kommende Masse nach einem Brechen in einer relativ kleinen Mühle wieder eingesetzt werden kann als Strahlmittel, ist lediglich ein Wasseranschluß erforderlich.

Ein weiterer Vorteil ist, daß ein solches Entsorgungs und Dekontaminations-Fahrzeug auch dazu verwendet werden kann, die bei anderen Asbestentsorgungsverfahren anfallenden, mehr grobstückigen Abfälle (Asbestplatten, zersägtes Mauerwerk und dergleichen) ebenfalls einer Thermomodifikation zu unterwerfen, so daß der Drehrohrofen mehrfach genutzt werden kann.

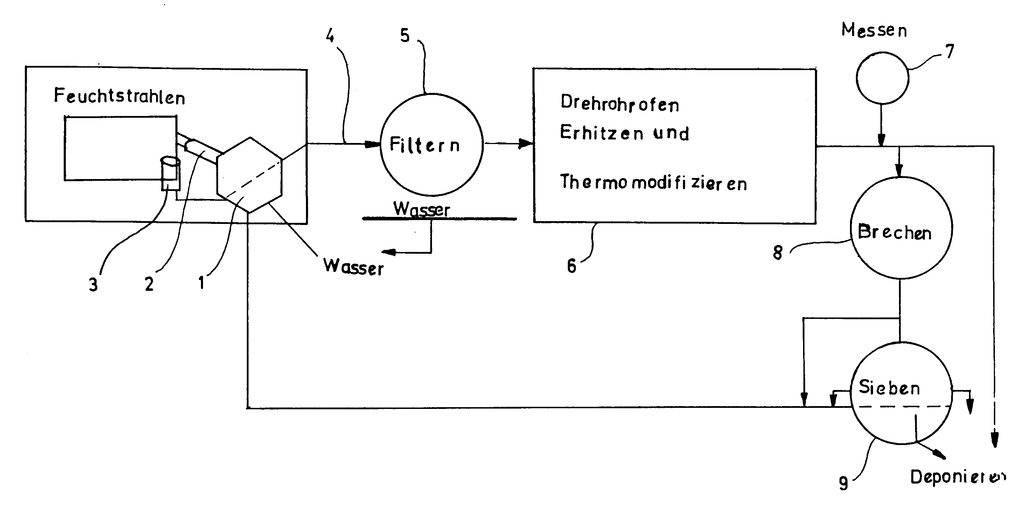

Als Ausführungsbeispiel wird anhand der Zeichnung das Verfahren an einem Flußdiagramm erläutert.

Mit Hilfe eines Feuchtstrahl-Strahlgerätes 1, das mit einer Strahlpistole 2 ausgerüstet ist, wird von einer Wand der sogenannte Spritzasbest entfernt. Das anfallende Strahlmittel-Asbestmassen-Gemisch wird in einem Trichtermundstück 3 aufgefangen und über eine Saug- und Druckleitung 4 einem geschlossenen Druckfilter 5 zugeführt. Unter Vermeidung jeglichen Abfließens von Asbestfasern wird ein Großteil des Wassers entfernt und das mit einer gewissen Restfeuchte versehene Material einem Drehrohrofen 6 zugeführt. In dem Drehrohrofen 6 wird das Material umgewälzt und auf eine Temperatur von 1100°C, über etwa 30 - 70 Minuten erhitzt. Während dieser Zeit erfolgt eine Umwandlung der physiologisch schädlichen Asbestfasern der Mineralien Krokydolith und Chrysotil in unschädliche Mineralien, insbesondere Forsterit. Das Material wird aus dem Ofen abgezogen, abgekühlt und mit Hilfe eines Röntgen-Diffraktometers 7 auf Faserfreiheit untersucht. Nachdem die Freigabe des Materials durch entsprechende Untersuchungen erklärt worden ist, kann es entweder auf einer Deponie abgelagert werden, oder in einem Brecher 8 gebrochen und anschließend gesiebt werden, wobei das feinere Material wiederum in staubdichte Säcke abgefüllt und deponiert wird, während das abgesiebte Material erneut dem Strahlgerät 1 zugeführt, mit Wasser vermischt und zum Strahlen verwendet wird. Es ist aber auch möglich, das gebrochene und entsprechend zerkleinerte Material direkt wieder dem Strahlgerät zuzuführen und damit das Sieb 9 zu umgehen.

Die einzelnen verfahrenstechnischen Teile können entsprechend den in den Ansprüchen und in der Beschreibungseinleitung gegebenen Anregungen auch untereinander getauscht werden. Wesentlich ist, daß eine Freisetzung von Asbestfasern durch ausreichende Befeuchtung und sorgfältige Förderung vermieden und durch Thermomodifikation der schädlichen Asbestfasern nach dem Erwärmen das im wesentlichen schädliche Material des Asbestanteils nicht mehr vorhanden ist, so daß eine zyklische Verwendung möglich ist.

## Patentansprüche

1. Verfahren zur Entfernung von asbesthaltigen Massen von einem Substrat und Modifizierung der Massen, wobei die asbesthaltigen Massen mittels eines aus Wasser und Quarzsand bestehenden Hochimpulsstrahles unter Befeuchtung abgetragen, aufgefangen und erforderlichenfalls entfeuchtet werden und anschließend das Asbestfaser-Material und Quarzsand enthaltende Gemisch in einem Ofen auf 750° C bis 1250° C bis zur vollständigen Thermomodifikation in vorwiegend Forsterit umgewandelt wird und das abgekühlte Gemisch als Strahlmittel für die Ablösung von Asbest wiederverwendet wird.

2. Verfahren nach Anspruch 1, dadurch gekennzeichnet, daß der Hochimpulsstrahl aus Quarzsand und einem Wasseranteil von 20 - 50 Gew.% besteht.

3. Verfahren nach Anspruch 1 oder 2, dadurch gekennzeichnet, daß die feuchte, abgetragene Masse, enthaltend Asbestmasse, Wasser und Quarzsand, unmittelbar hinter dem Ablösebereich abgesaugt und mit Hilfe einer Saug- und Druckleitung gefördert wird.

4. Verfahren nach Anspruch 1 oder 2, dadurch gekennzeichnet, daß die feucht abgetragene Masse, enthaltend Asbestmasse, Wasser und Quarzsand, unmittelbar hinter dem Auslösebereich abgesaugt und mit Hilfe einer in einem geschlossenen Rohr arbeitenden Förderschnecke gefördert wird.

5. Verfahren nach Anspruch 1 oder 2, dadurch gekennzeichnet, daß die feucht abgetragene Masse, enthaltend Asbestmasse, Wasser und Quarzsand, unmittelbar hinter dem Ablösebereich abgesaugt und mit Hilfe eines geschlossenen Bandförderers gefördert wird.

6. Verfahren nach einem der Ansprüche 1 bis 5, dadurch gekennzeichnet, daß die Entfeuchtung durch Abzentrifugieren des Wasser erfolgt.

7. Verfahren nach wenigstens einem der Ansprüche 1 bis 5, dadurch gekennzeichnet, daß die Entfeuchtung durch Abfiltern, vorzugsweise Druckfiltern des Wassers erfolgt.

8. Verfahren nach wenigstens einem der vorhergehenden Ansprüche, dadurch gekennzeichnet, daß das aus thermomodifiziertem Asbest und Strahlmittel bestehende Gemisch nach dem Abkühlen vor der Verwendung als Strahlmittel gebrochen wird.

9. Verfahren nach Anspruch 1, gekennzeichnet durch Anwendung eines Drehofens zur Erhitzung des Gemisches.

10. Verfahren nach Anspruch 9, dadurch gekennzeichnet, daß der Drehofen während des Erhitzens geschlossen ist und chargenweise betreibbar ist.

11. Verfahren nach Anspruch 1, gekennzeichnet durch Anwendung eines Heißluft-Bandofens zur Erhitzung des Gemisches.

## Claims

1. A method of removing asbestos-containing materials from a substrate and modifying the materials, the asbestos-containing materials being removed with wetting by means of a high-impulse jet consisting of water and quartz sand, collected, and if necessary the moisture removed, whereupon the mixture containing asbestos fibre material and quartz sand is converted in an oven at 750°C to 1250°C until complete thermo-modification to primarily forsterite and the cooled mixture is re-used as a jetting medium for the loosening of asbestos.

2. A method according to Claim 1, characterised in that the high-impulse jet consists of quartz sand and a water component of 20 to 50% by weight.

3. A method according to Claim 1 or 2, characterised in that the wet removed material containing asbestos material, water and quartz sand, is removed by suction immediately after the loosening zone and is conveyed by means of a suction and pressure pipe.

4. A method according to Claim 1 or 2, characterised in that the wet removed material containing asbestos material, water and quartz sand, is removed by suction immediately after the loosening zone and is conveyed by means of a feed screw operating in a closed pipe.

5. A method according to Claim 1 or 2, characterised in that the wet removed material containing asbestos material, water and quartz sand, is removed by suction immediately after the loosening zone and is conveyed by means of a closed belt conveyor.

6. A method according to any one of Claims 1 to 5, characterised in that the moisture removal is effected by centrifuging the water off.

7. A method according to at least one of Claims 1 to 5, characterised in that the moisture removal is effected by filtration, preferably pressure filtration of the water.

8. A method according to at least one of the preceding claims, characterised in that the mixture consisting of thermo-modified asbestos and jetting medium is broken after cooling and before use as a jetting medium.

9. A method according to Claim 1, characterised by the use of a rotary kiln to heat the mixture.

10. A method according to Claim 9, characterised in that the rotary kiln is closed during heating and is adapted to batch operation.

11. A method according to Claim 1, characterised by the use of a hot-air belt furnace to heat the mixture.

## Revendications

1. Procédé pour l'élimination sur un substrat de matières contenant de l'amiante et pour la modification des matières, les matières contenant de l'amiante étant enlevées, avec humidification, au moyen d'un jet à haute pression constitué d'eau et de sable siliceux, collectées et si nécessaire déshumidifiées et le mélange contenant des fibres d'amiante et du sable siliceux étant ensuite transformé principalement en forstérite dans un four à une température comprise entre 750 et 1250°C jusqu'à une modification thermique complète et le mélange refroidi étant réutilisé comme agent de sablage pour l'élimination d'amiante.

2. Procédé selon la revendication 1, caractérisé par le fait que le jet à haute pression est constitué de sable siliceux et de 20 à 50% en poids d'eau.

3. Procédé selon la revendication 1 ou 2, caractérisé par le fait que la matière humide enlevée, qui contient de l'amiante, de l'eau et du sable siliceux, est aspirée directement en aval de la zone d'enlèvement et est transportée à l'aide d'une conduite d'aspiration et de refoulement.

4. Procédé selon la revendication 1 ou 2, caractérisé par le fait que la matière enlevée à l'état humide, qui contient de l'amiante, de l'eau et du sable siliceux, est aspirée directement en aval de la zone d'enlèvement et est transportée à l'aide d'une vis transporteuse fonctionnant dans un conduit fermé.

5. Procédé selon la revendication 1 ou 2, caractérisé par le fait que la matière enlevée à l'état humide, qui contient de l'amiante, de l'eau et du sable siliceux, est aspirée directement en aval de la zone d'enlèvement et est transportée à l'aide d'un convoyeur à courroie fermé.

6. Procédé selon l'une des revendications 1 à 5, caractérisé par le fait que la déshumidification s'effectue par élimination de l'eau par centrifugation.

7. Procédé selon au moins l'une des revendications 1 à 5, caractérisé par le fait que la déshumidification s'effectue par filtrage, de préférence filtrage sous pression, de l'eau.

8. Procédé selon au moins l'une des revendications précédentes, caractérisé par le fait que le mélange constitué d'amiante modifiée thermiquement et d'agent de sablage est broyé une fois refroidi, avant d'être utilisé comme agent de sablage.

9. Procédé selon la revendication 1, caractérisé par l'utilisation d'un four tournant pour chauffer le mélange.

10. Procédé selon la revendication 9, caractérisé par le fait que le four tournant est fermé pendant le chauffage et peut fonctionner de manière discontinue.

11. Procédé selon la revendication 1, caractérisé par l'utilisation d'un four à tapis à air chaud pour le chauffage du mélange.
